# EUROPEAN PATENT SPECIFICATION

(11) **EP 3 321 990 B1**
(45) Date of publication and mention of the grant of the patent: **09.10.2019**
(21) Application number: 16198551.0
(22) Date of filing: 13.11.2016
(51) Int. Cl.: H01M 2/02, H01M 12/06, H01M 12/08, H01M 4/86, H01M 4/88

(54) **FLOW BATTERY, PROCESS FOR ITS MANUFACTURE, AND USE THEREOF**
FLUSSBATTERIE, HERSTELLUNSVERFAHREN UND VERWENDUNG
BATTERIE À FLUX, PROCÉDÉ DE FABRICATION ET UTILISATION

(43) Date of publication of application: 16.05.2018
(73) Proprietor: HILABS GmbH, 70565 Stuttgart (DE)
(72) Inventor: Haq, Manan, 70569 Stuttgart (DE)
(74) Representative: Meyer zu Bexten, Elmar

(56) References cited:
- US-A- 4 714 662
- US-A- 5 445 901
- US-A1- 2014 255 812

## Description

### Technical Field

The invention pertains to a flow battery, particularly a metal-air flow battery.

### Background Art

In electrochemistry and electrochemical engineering, by flow battery or redox flow battery (after *reduction-oxidation*) is meant a kind of battery where rechargeability is provided by two chemical components dissolved in liquids contained within the system and separated by a membrane. Because flow batteries can be rapidly "recharged" by replacing the electrolyte, they are increasingly considered for application in battery electric vehicles (BEV), as is pointed out in DUNLAP, Richard A. Sustainable Energy. Stamford: Cengage Learning, 2015. ISBN 1133108776. p.495. An overview and classification of this battery type is presented in NOACK, Jens, et al. The Chemistry of Redox-Flow Batteries. Angew. Chem., Int. Ed. Engl.. 26 June 2015, vol.54, no.34, p.9776-9809.

US 5445901 A (KORALL MENACHEM [IL] ET AL) 29.08.1995 discloses a multi-cell, sealed, zinc-oxygen battery, comprising a container containing (a) a plurality of bi-cells, each cell having a housing provided with two major surfaces and accommodating a pair of oppositely-disposed, spaced-apart, air-permeable, liquid-impermeable cathodes in the form of oxygen-reduction electrodes, and defining between themselves a cavity configured to accommodate an anode of the battery and electrolyte, substantial portions of the major surfaces of the housing being removed, thus exposing major portions of the oxygen electrodes, and wherein the two major surfaces are partly recessed in such a way as to form, in conjunction with a similarly-recessed outer surface of a major wall of an adjacent cell housing, an inter-cathode gas space between adjacent cells with a plurality of oxygen access openings leading thereto; (b) a dead space volume between inner surfaces of the housing and the plurality of bi-cells; and (c) pressurized oxygen supply means for feeding oxygen to the dead space volume, for consumption in the inter-cathode gas spaces.

Taylor Vortex Flow galvanic electrochemical cells such as batteries, flow cells and fuel cells for converting chemical energy into electrical energy and comprising a cylindrical spinning particulate filter between static cylindrical current collectors for use with electrolytes containing galvanic charge transfer particles functioning as numerous miniature electrodes and means for pumping electrolyte through the filter to produce accelerated reaction electrochemistry for higher cell power density are disclosed in US 2014255812 A (FISCH EL HALBERT [US]) 11.09.2014.

US 4714662 A (BENNETT WILLIAM R [US]) 22.12.1987 discloses a power module of the type including a plurality of power cells arranged in a longitudinal stacked relation. Each power cell includes a frame, a gas-consuming cathode supported at one end of the frame and a consumable anode supported intermediate the ends of the frame by a flexible diaphragm spanning the frame. The diaphragm divides the frame into a chamber for the introduction thereinto of an electrolyte between the anode and the cathode, and an expansion chamber on the opposite side of the anode for the introduction thereinto of fluid under pressure. The pressurized fluid biases the anode toward the cathode during anode consumption, and the diaphragm provides for longitudinal and angular movement of the anode to accommodate uneven corrosion of the anode. The frames of adjacent cells define a third chamber therebetween for the introduction of consumable gas to the cathode. An array of manifolds is formed throughout the frames of adjacent power cells for introducing electrolyte between the anode and the cathode, for introducing consumable gas to the cathode and for introducing fluid under pressure to the expansion chamber.

WO 2015009029 A (H2 INC [KR]) 22.01.2015 relates to a redox flow battery or fuel cell stack assembled by stacking a plurality of plates provided with a passage through which an electrolyte passes, the redox flow battery or fuel cell stack comprising a plurality of electrolyte tubes inserted in the electrolyte passages, ion exchange membranes, and flow frames disposed at either side of the ion exchange membranes, wherein each flow frame has an electrolyte flow path formed therein and one end of each of the plurality of electrolyte tubes comes in contact with each of the electrolyte flow paths.

### Summary of invention

The invention aims to provide an improved flow battery.

### Technical Problem

State-of-the-art flow batteries suffer from drawbacks such as congestion of their electrodes, defects in liquid tightness, or shunt currents, all of which may lead to efficiency drop.

### Solution to Problem

The problem is solved by the characterizing features of the independent claims.

### Advantageous effect of invention

The modular approach as per the invention allows for a dramatic increase in energy density, shortening of charge time, and cost-efficient production. Embodiments of the invention are set out in the dependent claims.

Particularly, a reduction of sealing surfaces may be achieved to avoid leakage. Such leakage poses a major problem with known flow batteries, where components such as air electrode, separator, bipolar plate, and circuitry need to be stacked and mutually sealed. In these conventional batteries, the use of different materials of varying porosity and surface texture typically impedes the implementation of a seal that is free from leakage. Additionally, the separator film used in these devices tends to roll away, further complicating the stacking procedure.

Another embodiment provides for the introduction of energizing elements into the channel structure to enhance fluid flow by avoiding dead water areas, calculus generation, or clogging, increase turbulence and ionic conductivity, and improve clustering as well as hydrogen bonding. These improvements in turn lead to an increased self-cleaning capacity of the air electrode, ultimately resulting in an extended service life of the resulting battery.

Said energizing elements may possess various characteristics and consist of materials such as synthetics, ferromagnetic and other metals, crystals, and further constituents selected to affect clustering in water. Preferably, such elements are of a streamlined, flat shape that offers light flow resistance while introducing turbulence into the fluid flow, thus promoting mixing. This way, metal particles carried axially in the fluid without prior conductor contact may be pressed against the channel wall where they can undergo the desired reaction.

Advantageously, the structural, conceptional, material, and procedural aspects of the invention render the proposed battery suited as a torsionally rigid tube for light-weight design. Here, its multi-chambered ducts may serve a dual purpose both as a structural and functional element. In this application, the inventive approach facilitates a massive increase in energy density compared to conventional flow batteries: In the latter case, the reactor, failing to contribute to the supporting structure, essentially constitutes dead mass when incorporated into a vehicle or other mobile apparatus. By contrast, an embodiment of the invention permits a highly scalable BEV design. When filled with ionic fluid, the battery may even achieve a cooling effect.

Furthermore, the uniform structure inherent to an embodiment of the invention allows for a significant reduction in manufacturing expenses by eliminating a large part of the production costs associated with conventional battery stacks. Firstly, its modular layout applies broadly to a variety of form factors and particularly provides for a series connection of arbitrary voltage. To this end, any number of ducts may be arranged in a planar structure such as the floor panel of a battery electric vehicle. Secondly, its manufacture does not require a dust-free clean room or otherwise controlled level of contamination, as is typically the case with conservative metal-air flow batteries. Thirdly, the proposed battery may be manufactured additively by means of so-called 3D printing. Fourthly and lastly, a worn-out battery as per the invention may be given a second life by remanufacturing or recycling any useable ducts in a factory environment.

### Brief description of drawings

Figure 1 is a transversal section of a battery duct.
Figure 2 is a longitudinal section of a chamber of the duct.
Figure 3 is a plan view of the duct.
Figure 4 is an exploded view of a battery.

### Description of embodiments

One way of carrying out the invention claimed is hereinafter described at detail.

### Example

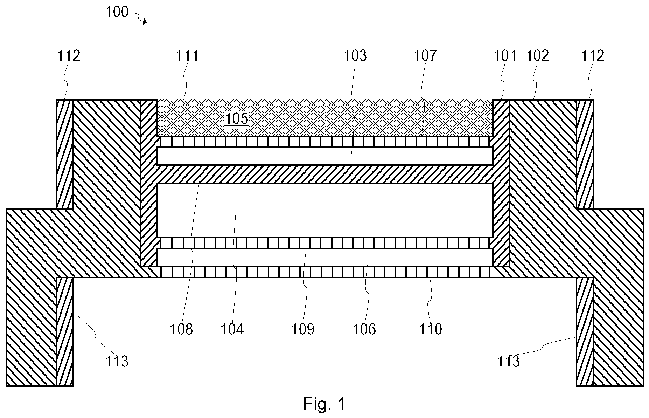

Figure 1 shows a multi-chambered duct (100) comprising an insulating and lye-proof outer frame (102) of polypropylene and a conducting inner frame (101) encased therein. The inner frame (101) forms a first chamber (105) containing an air electrode (111), the first chamber (105) separated by a first partition wall (107) from a second chamber (103) filled with aerial oxygen or ionic liquid (not depicted). An impermeable second partition wall (108) seals the second chamber (103) from a third chamber (104) charged with zinc slurry (not depicted), which chamber in turn is divided from a fourth chamber (106) by a third partition wall (109). The first wall (107) and third wall (109), both of which are partly perforated, exhibit pores ranging from 100 nm to 5 µm in diameter. Opposite the third partition wall (109), the outer frame (102) forms a perforated outer wall (110) that delimits the fourth chamber (106) and encloses the electrolyte (not depicted) flowing therethrough. Also, the outer frame (102) exhibits complementarily formed regions (112, 113) that may be used for plugging the duct together with further ducts (100) of the same or similar shape and size.

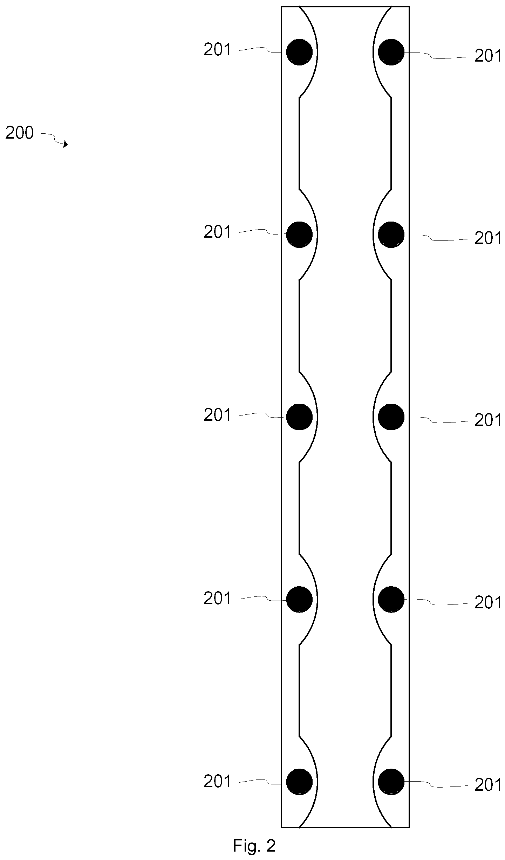

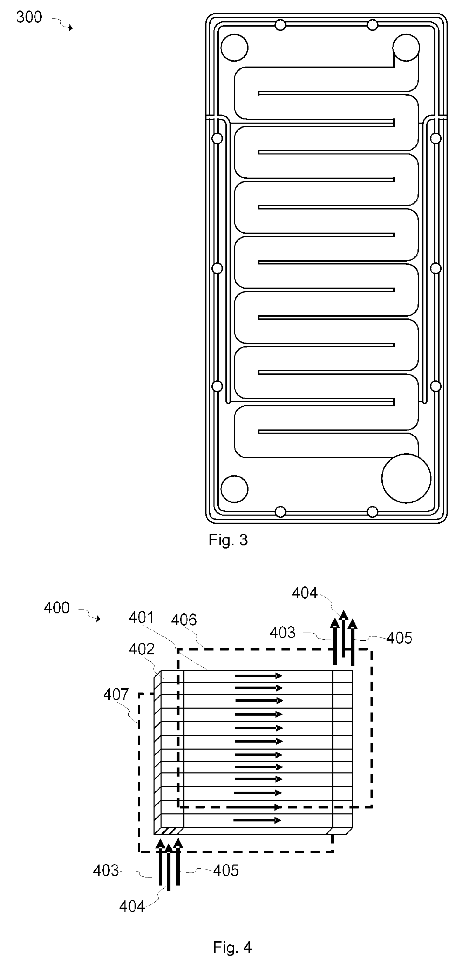

As may be taken from Figure 2, the third or fourth chamber (200) comprises energizing elements (201) for guiding the fluid flow passing through it. Herein, each duct (300) exhibits an essentially uniform cross section such as the one shown in Figure 3.

An advantageous process for the manufacture of a flow battery (400) based on such ducts (100, 300, 401) is now described. To this end, a conductor may be extruded into stock that forms the chambers and walls therebetween, of which the first wall (107) and third wall (109) are laser-perforated. Next, a gas diffusion layer (GDL) and catalysis layer are wet-laid into the first chamber (105) and compressed with each other under a given pressure, these layers now jointly constituting the air electrode (111). Upon curing and pyrolyzing the latter, the stock is encased in a lye-proof insulator and broken down into ducts (100, 300, 401) such that the conductor forms the inner frame (101) and the insulator forms the outer frame (102) of each duct. The flow battery (400) may now be finalized by mutually plugging the ducts (100, 300, 401) together in a serial connection and plugging joining elements (402) bilaterally onto the ducts (100, 300, 401). The resulting panel can be welded between two thin shell elements (406, 407) for use as a support element in a car body. Figure 4 shows an exploded view of a battery based on the ducts of the invention.

### Industrial applicability

The invention is applicable throughout, *inter alia*, the electricity and manufacturing - especially automotive - industries.

### Reference signs list

- 100: Duct
- 101: Inner frame
- 102: Outer frame
- 103: Second chamber
- 104: Third chamber
- 105: First chamber
- 106: Fourth chamber
- 107: First (partition) wall
- 108: Second (partition) wall
- 109: Third (partition) wall
- 110: Outer wall
- 111: Air electrode
- 112: Complementarily formed region
- 113: Complementarily formed region
- 200: Third or fourth chamber
- 201: Energizing element
- 300: Duct
- 400: Flow battery
- 401: Duct
- 402: Joining element
- 403: Air, ionic fluid, or electrolyte
- 404: Metal slurry
- 405: Ionic fluid or electrolyte
- 406: Shell element
- 407: Shell element

### Citation list

The following documents are cited throughout this document.

### Patent literature

US 5445901 A (KORALL MENACHEM [IL] ET AL) 29.08.1995
US 2014255812 A (FISCH EL HALBERT [US]) 11.09.2014
US 4714662 A (BENNETT WILLIAM R [US]) 22.12.1987
WO 2015009029 A (H2 INC [KR]) 22.01.2015

### Non-patent literature

NOACK, Jens, et al. The Chemistry of Redox-Flow Batteries. Angew. Chem., Int. Ed. Engl.. 26 June 2015, vol.54, no.34, p.9776-9809.
DUNLAP, Richard A. Sustainable Energy. Stamford: Cengage Learning, 2015. ISBN 1133108776. p.495.

## Claims

1. Flow battery (400) having multi-chambered ducts (100, 300, 401) mutually plugged together, each duct containing an integrated air electrode (111),
partition walls being partly ion-permeably perforated and partly impermeable, and
nonconducting joining elements (402) with integrated passages, the joining elements (402) plugged bilaterally onto the ducts (100, 300, 401).

2. Battery (400) as in claim 1,
**characterized in that**
each duct comprises an insulating and lye-proof outer frame (102), preferably of polypropylene, and a conducting inner frame (101) encased in the outer frame (102).

3. Battery (400) as in claim 2,
**characterized in that**
the inner frame (101) forms a first chamber (105) containing the air electrode (111), a second chamber (103), a third chamber (104), a fourth chamber (106), a partly perforated first partition wall (107) between the first chamber (105) and the second chamber (103), an impermeable second partition wall (108) between the second chamber (103) and the third chamber (104), and a partly perforated third partition wall (109) between the third chamber (104) and the fourth chamber (106).

4. Battery (400) as in claim 3,
**characterized in that**
the outer frame (102) forms a perforated outer wall (110) delimiting the fourth chamber (106) opposite the third partition wall (109).

5. Battery (400) as in claim 3 or claim 4,
**characterized in that**
the third chamber (104) or fourth chamber (106) comprises energizing elements (201) for guiding or impairing a fluid flow.

6. Battery (400) as in any of claim 3 to claim 5,
**characterized in that**
the second chamber (103) contains oxygen, preferably air (403), or ionic fluid (405).

7. Battery (400) as in any of claim 3 to claim 6,
**characterized in that**
the third chamber (104) contains metal slurry (404) preferably based on zinc, lithium, or vanadium.

8. Battery (400) as in any of claim 3 to claim 7,
**characterized in that**
the fourth chamber (106) contains electrolyte.

9. Battery (400) as in any of claim 3 to claim 8,
**characterized in that**
the first wall (107) and third wall (109) exhibit pores, preferably ranging from 50 nm to 5 µm in diameter.

10. Battery (400) as in any of the preceding claims,
**characterized in that**
each duct exhibits a longitudinally uniform cross section.

11. Battery (400) as in any of the preceding claims,
**characterized in that**
the outer frame (102) exhibits complementarily formed regions (112, 113) for plugging the ducts (100, 300, 401) together.

12. Process for the manufacture of a battery (400) as in claim 1
**characterized in**
extruding a conductor into stock such that the stock forms a first chamber (105) for integrating an air electrode (111), a second chamber (103), a third chamber (104), a fourth chamber (106), a first partition wall (107) between the first chamber (105) and the second chamber (103), a second partition wall (108) between the second chamber (103) and the third chamber (104), and a third partition wall (109) between the third chamber (104) and the fourth chamber (106),
perforating the first wall (107) and third wall (109),
integrating the air electrode (111) into the first chamber (105),
encasing the stock in a lye-proof insulator,
breaking the stock down into ducts (100, 300, 401),
mutually plugging the ducts (100, 300, 401) together, and
plugging joining elements (402) bilaterally onto the ducts (100, 300, 401).

13. Process as in claim 12,
**characterized in that**
the first wall (107) and third wall (109) are laser-perforated.

14. Process as in claim 12 or claim 13,
**characterized in that**
the air electrode (111) is integrated by
wet-laying a gas diffusion layer into the first chamber (105),
wet-laying a catalysis layer onto the gas diffusion layer,
compressing the gas diffusion layer with the catalysis layer under a given pressure into the air electrode (111),
curing the air electrode (111), and
pyrolyzing the air electrode (111).

15. Use of a battery (400) as in claim 1
as a structural element of an electric vehicle, preferably a floor panel of a car.

## Patentansprüche

1. Strömungsbatterie (400) mit ineinandergesteckten Mehrkammer-Kanälen (100, 300, 401), wobei jeder Kanal eine integrierte Luftelektrode (111) enthält, Trennwänden, die teilweise ionendurchlässig perforiert und teilweise undurchlässig sind, und nichtleitenden Verbindungselementen (402) mit integrierten Durchlässen, wobei die Verbindungselemente (402) beidseitig auf die Kanäle (100, 300, 401) gesteckt sind.

2. Batterie (400) nach Anspruch 1, **dadurch gekennzeichnet, dass** jeder Kanal einen isolierenden und laugendichten Außenrahmen (102), vorzugsweise aus Polypropylen, und einen leitenden Innenrahmen (101) umfasst, der vom Außenrahmen (102) umgeben ist.

3. Batterie (400) nach Anspruch 2, **dadurch gekennzeichnet, dass** der Innenrahmen (101) eine erste Kammer (105) mit der Luftelektrode (111), eine zweite Kammer (103), eine dritte Kammer (104), eine vierte Kammer (106), eine teilweise perforierte erste Trennwand (107) zwischen der ersten Kammer (105) und der zweiten Kammer (103), eine undurchlässige zweite Trennwand (108) zwischen der zweiten Kammer (103) und der dritten Kammer (104) sowie eine teilweise perforierte dritte Trennwand (109) zwischen der dritten Kammer (104) und der vierten Kammer (106) bildet.

4. Batterie (400) nach Anspruch 3, **dadurch gekennzeichnet, dass** der Außenrahmen (102) eine perforierte Außenwand (110) bildet, die die vierte Kammer (106) gegenüber der dritten Trennwand (109) begrenzt.

5. Batterie (400) nach Anspruch 3 oder Anspruch 4, **dadurch gekennzeichnet, dass** die dritte Kammer (104) oder vierte Kammer (106) Erregungselemente (201) zum Führen oder Beeinflussen eines Fluidstroms umfasst.

6. Batterie (400) nach einem der Ansprüche 3 bis 5, **dadurch gekennzeichnet, dass** die zweite Kammer (103) Sauerstoff, vorzugsweise Luft (403), oder lonenflüssigkeit (405) enthält.

7. Batterie (400) nach einem der Ansprüche 3 bis 6, **dadurch gekennzeichnet, dass** die dritte Kammer (104) Metallschlamm (404) vorzugsweise auf Basis von Zink, Lithium oder Vanadium enthält.

8. Batterie (400) nach einem der Ansprüche 3 bis 7, **dadurch gekennzeichnet, dass** die vierte Kammer (106) Elektrolyt enthält.

9. Batterie (400) nach einem der Ansprüche 3 bis 8, **dadurch gekennzeichnet, dass** die erste Wand (107) und die dritte Wand (109) Poren aufweisen, die vorzugsweise einen Durchmesser von 50 nm bis 5 µm haben.

10. Batterie (400) nach einem der vorstehenden Ansprüche, **dadurch gekennzeichnet, dass** jeder Kanal einen in Längsrichtung gleichmäßigen Querschnitt aufweist.

11. Batterie (400) nach einem der vorstehenden Ansprüche, **dadurch gekennzeichnet, dass** der äußere Rahmen (102) einander ergänzend geformte Abschnitte (112, 113) zum Zusammenstecken der Kanäle (100, 300, 401) aufweist.

12. Verfahren zur Herstellung einer Batterie (400) nach Anspruch 1, **dadurch gekennzeichnet, dass** ein Leiter so in ein Stangenmaterial extrudiert wird, dass das Stangenmaterial eine erste Kammer (105) zur Integration einer Luftelektrode (111), eine zweite Kammer (103), eine dritte Kammer (104), eine vierte Kammer (106), eine erste Trennwand (107) zwischen der ersten Kammer (105) und der zweiten Kammer (103), eine zweite Trennwand (108) zwischen der zweiten Kammer (103) und der dritten Kammer (104) und eine dritte Trennwand (109) zwischen der dritten Kammer (104) und der vierten Kammer (106) bildet, die erste Wand (107) und die dritte Wand (109) perforiert, die Luftelektrode (111) in die erste Kammer (105) integriert, das Stangenmaterial in einem laugendichten Isolator ummantelt und in Kanäle (100, 300, 401) zerlegt, die Kanäle (100, 300, 401) zusammengesteckt und Verbindungselemente (402) beidseitig auf die Kanäle (100, 300, 401) gesteckt werden.

13. Verfahren nach Anspruch 12, **dadurch gekennzeichnet, dass** die erste Wand (107) und die dritte Wand (109) laserperforiert werden.

14. Verfahren nach Anspruch 12 oder Anspruch 13, **dadurch gekennzeichnet, dass** die Luftelektrode (111) integriert wird, indem eine Gasdiffusionsschicht in die erste Kammer (105) nassgelegt, eine Katalyseschicht auf die Gasdiffusionsschicht nassgelegt, die Gasdiffusionsschicht mit der Katalyseschicht unter einem gegebenen Druck zur Luftelektrode (111) verdichtet und die Luftelektrode (111) gehärtet und pyrolysiert wird.

15. Verwendung einer Batterie (400) nach Anspruch 1 als Strukturbauteil eines Elektrofahrzeugs, vorzugsweise als Bodenplatte eines Autos.

## Revendications

1. Batterie d'écoulement (400) ayant des conduits à chambres multiples (100, 300, 401) mutuellement obturés ensemble, chaque conduit contenant une électrode à air intégrée (111), des cloisons de séparation partiellement perforées perméables aux ions et partiellement imperméables, et des éléments de liaison non conducteurs (402) avec passages intégrés, les éléments de liaison (402) étant enfichés bilatéralement sur les conduits (100, 300, 401).

2. Batterie (400) selon la revendication 1, **caractérisée en ce que** chaque conduit comprend un cadre extérieur (102) isolant et étanche à la lessive, de préférence en polypropylène, et un cadre intérieur conducteur (101) logé dans le cadre extérieur (102).

3. Batterie (400) selon la revendication 2, **caractérisée en ce que** le cadre intérieur (101) forme une première chambre (105) contenant l'électrode d'air (111), une deuxième chambre (103), une troisième chambre (104), une quatrième chambre (106), une première paroi de séparation (107) partiellement perforée entre la première chambre (105) et la deuxième chambre (103), une deuxième paroi de séparation imperméable (108) entre la deuxième chambre (103) et la troisième chambre (104) et une troisième paroi de séparation (109) partiellement perforée entre la troisième chambre (104) et la quatrième chambre (106).

4. Batterie (400) selon la revendication 3, **caractérisée en ce que** le cadre extérieur (102) forme une paroi extérieure perforée (110) délimitant la quatrième chambre (106) opposée à la troisième paroi de séparation (109).

5. Batterie (400) selon la revendication 3 ou 4, **caractérisée en ce que** la troisième chambre (104) ou la quatrième chambre (106) comprend des éléments d'excitation (201) pour guider ou entraver un écoulement de fluide.

6. Batterie (400) comme dans l'une quelconque des revendications 3 à 5, **caractérisée en ce que** la seconde chambre (103) contient de l'oxygène, de préférence de l'air (403), ou du fluide ionique (405).

7. Batterie (400) selon l'une quelconque des revendications 3 à 6, **caractérisée en ce que** la troisième chambre (104) contient une suspension métallique (404) de préférence à base de zinc, lithium ou vanadium.

8. Batterie (400) comme dans l'une quelconque des revendications 3 à 7, **caractérisée en ce que** la quatrième chambre (106) contient de l'électrolyte.

9. Batterie (400) selon l'une quelconque des revendications 3 à 8, **caractérisée en ce que** la première paroi (107) et la troisième paroi (109) présentent des pores, de préférence de 50 nm à 5 µm de diamètre.

10. Batterie (400) comme dans l'une quelconque des revendications précédentes, **caractérisée en ce que** chaque conduit présente une section transversale uniforme longitudinalement.

11. Batterie (400) comme dans l'une quelconque des revendications précédentes, **caractérisée en ce que** le cadre extérieur (102) présente des zones (112, 113) formées de manière complémentaire pour enficher les conduits (100, 300, 401) ensemble.

12. Procédé de fabrication d'une batterie (400) selon la revendication 1, **caractérisé par** l'extrusion d'un conducteur dans un matériau de telle sorte que le matériau forme une première chambre (105) pour intégrer une électrode à air (111), une deuxième chambre (103), une troisième chambre (104), une quatrième chambre (106), une première paroi de séparation (107) entre la première chambre (105) et la deuxième chambre (103), une seconde paroi de séparation (108) entre la deuxième chambre (103) et la troisième chambre (104) et une troisième paroi de séparation (109) entre la troisième chambre (104) et la quatrième chambre (106), perforer la première paroi (107) et la troisième paroi (109), intégrer l'électrode à air (111) dans la première chambre (105), envelopper le matériau dans un isolant étanche à la lessive, décomposer le matériau en conduits (100, 300, 401), enficher ensemble mutuellement les conduits (100, 300, 401) et enficher bilatéralement sur les conduits (100, 300, 402) les éléments de liaison (402).

13. Procédé selon la revendication 12, **caractérisé en ce que** la première paroi (107) et la troisième paroi (109) sont perforées au laser.

14. Procédé selon la revendication 12 ou la revendication 13, **caractérisé en ce que** l'électrode à air (111) est intégrée par dépôt humide d'une couche de diffusion de gaz dans la première chambre (105), dépôt humide d'une couche de catalyse sur la couche de diffusion de gaz, compression de la couche de diffusion de gaz sous une pression donnée dans l'électrode à air (111), cuisson de l'électrode à air (111) et pyrolyse de l'électrode à air (111).

15. Utilisation d'une batterie (400) selon la revendication 1 comme élément structurel d'un véhicule électrique, de préférence comme panneau de plancher d'une voiture.
